# FASCICULE DE BREVET EUROPEEN

(11) **EP 2 513 569 B1**
(45) Date de publication et mention de la délivrance du brevet: **22.10.2014**
(21) Numéro de dépôt: 10801659.3
(22) Date de dépôt: 13.12.2010
(51) Int. Cl.: H01M 8/04, H01M 8/12, F24H 1/28, F23D 14/02, F23L 7/00, H01M 8/06

(54) **ECHANGEUR THERMIQUE POUR PILE A COMBUSTIBLE CHAUDE**
WÄRMETAUSCHER FÜR HOCHTEMPERATUR-BRENNSTOFFZELLE
HEAT EXCHANGER FOR HIGH TEMPERATURE FUEL CELL

(30) Priorité: 18.12.2009 FR 0959203
(43) Date de publication de la demande: 24.10.2012
(73) Titulaire: Snecma, 75015 Paris (FR)
(72) Inventeur: LOEVENBRUCK, Côme, F-27200 Vernon (FR); INDERSIE, Dominique, F-27200 Vernon (FR); BOUKHALFA, Abdelkrim, F-76130 Mont Saint Aignan (FR); TALBOT, Benoît, F-02100 Saint Quentin (FR)
(74) Mandataire: Boura, Olivier
(86) Numéro de dépôt international: PCT/FR2010/052681
(87) Numéro de publication internationale: WO 2011/073553

(56) Documents cités:
- EP-A1- 1 542 305
- WO-A1-92/19920
- WO-A1-2005/024301
- WO-A1-2006/136316
- WO-A2-2008/127122

## Description

### Domaine de l'invention

La présente invention concerne le domaine des échangeurs thermiques permettant de récupérer la chaleur contenue dans des gaz à haute température. L'invention concerne plus particulièrement les échangeurs thermiques utilisés en sortie d'une pile à combustible chaude.

### Arrière plan de l'invention

Les piles à combustible mettent en oeuvre une réaction d'oxydoréduction électrochimique avec production simultanée d'électricité. A cette fin, les électrodes de la pile doivent être alimentées respectivement avec un combustible, en général de l'hydrogène, et avec un comburant, à savoir de l'oxygène (issu par exemple d'un flux d'air introduit dans le coeur de la pile).

Les piles à combustible chaudes, telles que par exemple les piles à combustible de type à oxyde solide aussi couramment appelées SOFC (pour « Solid Oxid Fuel Cell »), ont des températures de fonctionnement très élevées (de l'ordre de 900°C). Ceci leur permet, en particulier, d'être avantageusement utilisées dans des systèmes dits de cogénération, c'est-à-dire des systèmes générant à la fois de l'énergie thermique et de l'énergie électrique. Ces systèmes de cogénération peuvent être utilisés pour des applications aussi bien domestiques (ex. production de chauffage et d'électricité dans des maisons individuelles) qu'industrielles.

Dans de tels systèmes, la pile à combustible doit être associée à un dispositif tel qu'une chaudière ou un échangeur thermique, qui est capable de récupérer la chaleur des rejets gazeux issus de la pile. Or, ces gaz issus de la pile à combustible chaude sont des gaz à très haute température, ce qui rend impossible l'utilisation, en aval de la pile à combustible chaude, des systèmes de chaudière standards destinés à traiter des flux thermiques à des températures moins élevées.

En effet, la plupart des chaudières sont réalisées typiquement avec des matériaux basse performance, tels qu'un acier inoxydable, qui permettent à moindre coût de réaliser un échange thermique entre un flux chaud et un fluide caloporteur. La circulation et l'injection de gaz à haute température est cependant très difficilement maîtrisable dans des circuits de chaudières réalisées avec de tels matériaux.

Une solution à ce problème pourrait consister à utiliser des matériaux haute performance qui résistent bien aux flux à haute température. Toutefois, l'utilisation de tels matériaux augmenterait considérablement le coût du système de cogénération, ce qui n'est pas souhaitable, notamment dans le cas d'applications domestiques.

Un exemple d'un tel échangeur thermique est montré au document WO9219920, qui montre les caractéristiques du préambule de la revendication 1 et est considéré comme étant l'état de la technique le plus pertinent.

### Objet et résumé de l'invention

La présente invention a pour but de pallier ces inconvénients et de proposer un échangeur thermique, destiné notamment à être utilisé en sortie d'une pile à combustible chaude (PAC) dans un système de cogénération par exemple, afin d'assurer la récupération de toute la chaleur (chaleur propre et pouvoir calorifique) contenue dans les gaz à haute température issus de la pile et ce sans nécessiter l'utilisation de matériaux haute performance au niveau de l'échangeur thermique.

Ce but est atteint grâce à un échangeur thermique destiné à fonctionner en sortie d'une pile à combustible chaude alimentant ledit échangeur en gaz comburant et combustible, l'échangeur comportant :
un premier circuit de circulation de gaz comburant ;
un deuxième circuit de circulation de gaz combustible ;
une chambre de pré-mélange alimentée par des gaz combustible issus au moins du deuxième circuit et par des gaz comburant ;
une chambre de combustion alimentée par le mélange gazeux issu de la chambre de pré-mélange et par des gaz comburant issus du premier circuit ; et
un circuit de circulation de fumées recevant les fumées provenant de la chambre de combustion ;
dans lequel le premier circuit de circulation de gaz comburant, le deuxième circuit de circulation de gaz combustible, la chambre de combustion et le circuit de circulation de fumées sont immergés dans un même fluide caloporteur.

Le premier circuit de circulation de gaz comburant et le deuxième circuit de circulation de gaz combustible de l'échangeur thermique selon l'invention sont alimentés respectivement par les rejets gazeux issus de la réaction d'oxydoréduction mise en oeuvre par la pile à combustible chaude. Ces gaz sont des gaz très chauds dont la température peut être supérieure à 650°C, par exemple de l'ordre de 900°C. Conformément à l'invention, ces gaz subissent une « post-combustion » dans la chambre à combustion de l'échangeur thermique.

Ainsi, en immergeant dans un même fluide caloporteur les différents circuits de circulation des gaz (comburant, combustible et fumées de combustion) et la chambre de combustion, on permet à l'échangeur thermique selon l'invention d'assurer la récupération de toute l'énergie thermique, à savoir la chaleur propre et le pouvoir calorifique, contenue dans les gaz issus de la pile à combustible chaude.

L'invention permet en outre de diminuer d'une part la température des gaz (comburant et combustible) issus de la pile à combustible chaude et d'autre part la température de la chambre de combustion.

De la sorte, le nombre des composants en contact direct avec les gaz à haute température est limité, ainsi que leur surface. Ceci rend avantageusement possible l'utilisation de matériaux à faible coût, notamment en acier inoxydable ou basse performance, pour les composants de l'échangeur thermique comme par exemple pour les composants permettant l'injection des gaz dans la chambre de combustion.

Par ailleurs, la diminution de la température de la chambre de combustion, refroidie par immersion dans le fluide caloporteur, permet de réaliser une combustion des gaz à basse température. Ceci a pour effet de réduire les quantités d'oxydes d'azote (NOx) émis lors de la combustion.

En outre, la présence d'une chambre de pré-mélange permet d'optimiser l'homogénéité du mélange combustible/comburant nécessaire à la stabilité de combustion dans la chambre de combustion située en aval.

Les gaz comburant alimentant la chambre de pré-mélange peuvent être issus d'un prélèvement sur le premier circuit. Alternativement, ces gaz comburant peuvent être issus d'un circuit extérieur de circulation de gaz comburant.

Par ailleurs, dans un mode particulier de réalisation de l'invention, l'échangeur thermique comporte en outre un troisième circuit de circulation de gaz combustible alimentant la chambre de pré-mélange et immergé dans le fluide caloporteur.

Ce troisième circuit permet de faire circuler dans l'échangeur thermique selon l'invention un gaz combustible provenant d'une autre source que de la pile à combustible chaude. Le troisième circuit peut ainsi être alimenté par un reformeur, tel que celui pouvant alimenter la pile à combustible chaude en hydrogène.

Le gaz provenant du reformeur peut également être un gaz à haute température, à savoir supérieure à 650°C. Ce gaz combustible est lui-même refroidi par le fluide caloporteur avant d'alimenter la chambre à combustion.

Dans un autre mode particulier de réalisation de l'invention, l'échangeur thermique comporte en outre un circuit extérieur de circulation de gaz combustible alimentant la chambre de pré-mélange. Un tel circuit extérieur permet d'augmenter si besoin l'énergie disponible pour la chaudière, notamment si les gaz issus de la pile à combustible en amont ne suffisent pas à assurer la demande en chaleur sur l'échangeur thermique.

De préférence, l'échangeur thermique comprend en outre une première enceinte, comportant le circuit de circulation de fumées et la chambre de combustion et une deuxième enceinte comportant les circuits de circulation des gaz comburant et combustible, la première et la deuxième enceinte étant adaptées à communiquer l'une avec l'autre de sorte que le fluide caloporteur circule entre ces deux enceintes.

Dans ce cas, les circuits de circulation de gaz comburant et combustible peuvent être notamment agencés en spirales de longueurs respectives sensiblement identiques autour de la première enceinte.

L'utilisation de conduits agencés en spirales pour les circuits de circulation permet d'améliorer l'efficacité de l'échange thermique en optimisant le rapport entre la distance parcourue par les gaz dans le fluide caloporteur (longueur des circuits) et l'encombrement résultant de l'échangeur thermique. Le chemin parcouru par les différents gaz comburant et combustible dans le circuit de fluide caloporteur est quasiment identique. Ceci permet à chacun des gaz d'avoir la même surface d'échange avec le fluide caloporteur (uniformisation des échanges gaz/fluide dans l'échangeur thermique).

Selon une disposition avantageuse de l'invention commune à l'ensemble des modes de réalisation, la chambre de pré-mélange est séparée de la chambre de combustion par une grille d'injection. Dans ce cas, l'alimentation de la chambre de combustion par les gaz comburant issus directement du premier circuit s'effectue avantageusement de manière annulaire autour de la grille d'injection. Cette alimentation permet de réaliser un refroidissement par film des parois de la chambre de combustion.

Selon une autre disposition avantageuse de l'invention commune à l'ensemble des modes de réalisation, les gaz comburant issus directement du premier circuit et alimentant la chambre de combustion transitent par une chambre d'air de dilution formée autour de la chambre de combustion.

L'invention a également pour objet une chaudière destinée à fonctionner en sortie d'une pile à combustible chaude, comportant un échangeur thermique tel que défini précédemment.

L'invention a encore pour objet un système de cogénération d'énergie thermique et d'énergie électrique comportant une pile à combustible chaude et un échangeur thermique tel que défini précédemment, alimenté en gaz comburant et combustible par la pile à combustible chaude.

L'échangeur thermique selon l'invention assure ainsi la fonction de « cogénération thermique » du système de cogénération global constitué de l'échangeur et de la pile à combustible chaude, tandis que la pile à combustible assure la fonction de « cogénération électrique ».

Dans un mode particulier de réalisation, le système de cogénération selon l'invention comporte en outre un reformeur, l'échangeur thermique du système comprenant un deuxième et un troisième circuits de circulation d'un gaz combustible, le deuxième et le troisième circuit de circulation étant alimentés respectivement par la pile à combustible chaude et par le reformeur.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif et sur lesquels:
- la figure 1 représente de façon schématique un système de cogénération ayant un échangeur thermique selon un premier mode de réalisation de l'invention ;
- la figure 2 est une vue en coupe longitudinale du système de cogénération de la figure 1 ;
- la figure 3 est vue du système de cogénération analogue à la figure 2 dans laquelle les circuits ont été retirés pour plus de clarté ; et
- les figures 4 et 5 sont des schémas fonctionnels d'échangeurs thermiques selon un deuxième et un troisième mode de réalisation de l'invention.

### Description détaillée de modes de réalisation

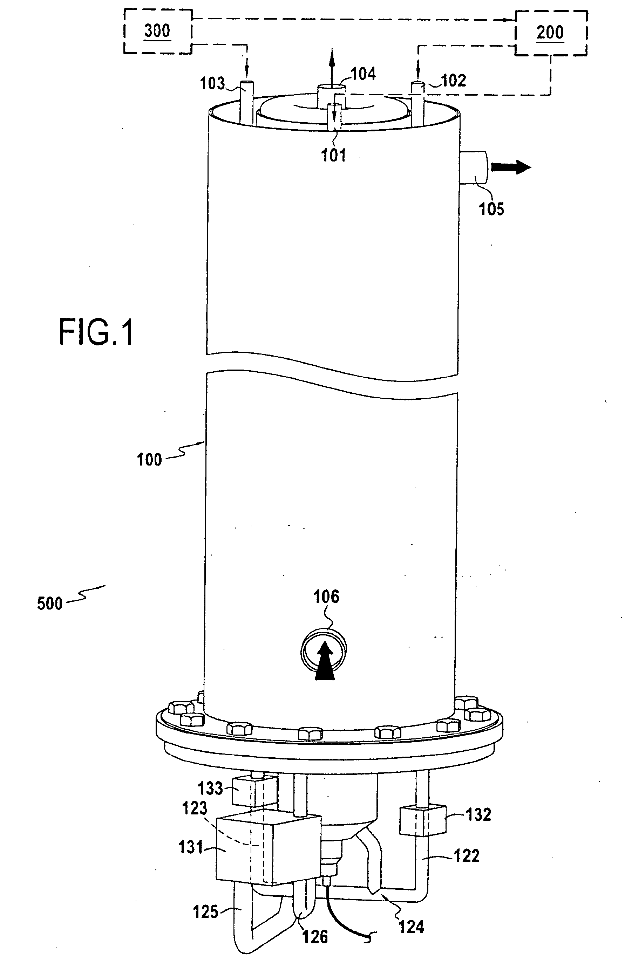

La figure 1 représente un système de cogénération 500 conforme à l'invention.

Le système de cogénération 500 comporte :
- un échangeur thermique 100 selon un premier mode de réalisation de l'invention ; et
- en aval de l'échangeur thermique 100, une pile à combustible chaude (PAC) 200 et un reformeur 300.

De façon connue, une pile à combustible chaude a une température de fonctionnement très élevée, supérieure à 650°C. Une telle. pile est par exemple une pile à combustible de type à oxyde solide couramment appelée pile à combustible SOFC et dont la température de fonctionnement est de l'ordre de 900°C. La structure et le fonctionnement de ce type de pile à combustible sont bien connus et ne seront pas décrits plus en détails ici.

Pour fonctionner (i.e. pour permettre une oxydoréduction électrochimique avec production simultanée d'électricité), les électrodes de la pile doivent être alimentées respectivement avec un gaz combustible, en général de l'hydrogène, et avec un gaz comburant, à savoir de l'oxygène, contenu par exemple dans un flux d'air alimentant la pile.

Dans l'exemple décrit ici, le reformeur 300 est utilisé d'une part pour alimenter la pile en gaz combustible, c'est-à-dire ici en hydrogène, et d'autre part pour alimenter l'échangeur thermique 100 en hydrogène via l'entrée 103. L'hydrogène issu du reformeur alimentant l'échangeur thermique a ici une température supérieure à 650°C.

Comme mentionné précédemment, la température de fonctionnement de la pile à combustible chaude 200 est très élevée. La pile rejette par conséquent un gaz comburant, principalement de l'oxygène sous forme d'air, et un gaz combustible, principalement de l'hydrogène, à de très hautes températures (typiquement, supérieures à 650°C), ces gaz alimentant respectivement l'échangeur thermique 100 via les entrées 101 et 102.

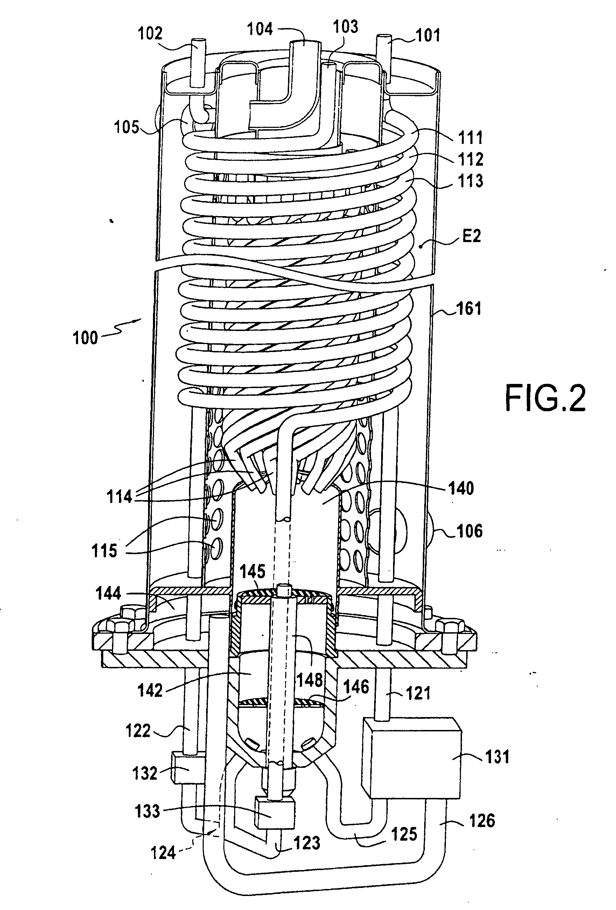

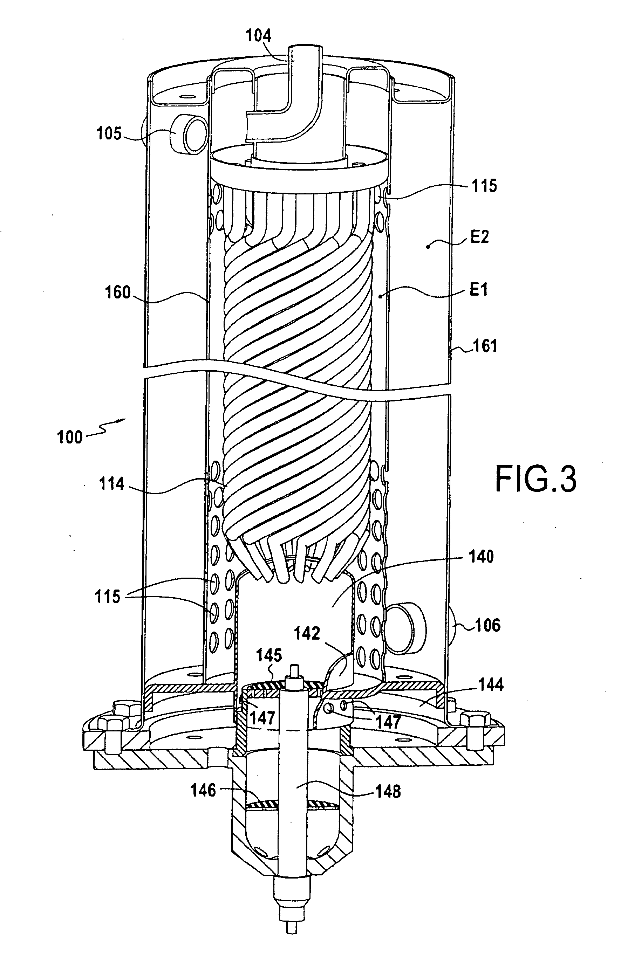

Comme le montrent les figures 2 et 3, dans le mode de réalisation décrit ici, l'échangeur thermique 100 comporte deux enceintes :
- une première enceinte cylindrique E1 dans laquelle se trouvent notamment une chambre de combustion 140 de forme sensiblement cylindrique et un circuit 114 de circulation des fumées se dégageant de la chambre de combustion ; et
- une deuxième enceinte E2, située dans la partie supérieure de l'échangeur thermique 100, et délimitée par une paroi cylindrique interne 160 et une paroi cylindrique externe 161. A l'intérieur de cette deuxième enceinte E2 se trouvent notamment un premier circuit de circulation 111 de gaz comburant (air), un deuxième circuit de circulation 112 de gaz combustible (hydrogène) et un troisième circuit de circulation 113 de gaz combustible (hydrogène).

Les deux enceintes E1 et E2 communiquent entre elles de sorte que, dans chacune de ces enceintes E1 et E2, circule un même fluide caloporteur, par exemple ici de l'eau. La circulation du fluide caloporteur est permise entre les deux enceintes grâce à des ouvertures 115 ménagées dans les parties inférieure et supérieure de la paroi interne 160 de la seconde enceinte.

Ainsi, la chambre de combustion 140, les premier, deuxième et troisième circuits de circulation des gaz comburant et combustible (111, 112 et 113) et le circuit 114 de circulation des fumées issus de la combustion sont disposés dans un même circuit de fluide caloporteur. L'immersion de ces différents circuits et de la chambre de combustion dans un même fluide caloporteur permet de récupérer via ce fluide toute la chaleur propre et tout le pouvoir calorifique (par combustion) des gaz issus de la pile à combustible chaude et potentiellement du reformeur.

L'alimentation de l'échangeur thermique 100 en fluide caloporteur se fait via l'entrée d'alimentation 106 située dans la partie inférieure de la paroi externe 161 de la deuxième enceinte E2. Quant à l'évacuation du fluide caloporteur de l'échangeur thermique 100, elle se fait via la sortie 105 dans la partie supérieure de la paroi externe 161 de la deuxième enceinte E2. Typiquement, le fluide caloporteur est alors être utilisé à des fins de chauffage.

Les circuits de circulation se trouvant dans la deuxième enceinte E2 sont alimentés de la façon suivante :
- le premier circuit de circulation 111 est alimenté via l'entrée d'alimentation 101 en gaz comburant (air) issu de la pile à combustible chaude 200 ;
- le deuxième circuit de circulation 112 est alimenté, via l'entrée d'alimentation 102, en gaz combustible (hydrogène) issu de la pile à combustible chaude 200 ; et
- le troisième circuit de circulation 113 est alimenté, via l'entrée d'alimentation 103, en gaz combustible (hydrogène) issu directement du reformeur 300.

Les trois circuits de circulation 111, 112 et 113 sont formés par des conduits agencés en spirales et disposés alternativement dans la deuxième enceinte E2 autour de la première enceinte E1. De façon connue, le nombre de spires des conduits dépend des performances de l'échangeur thermique 100. Dans l'exemple décrit ici, les nombres de spires des différents conduits 111, 112 et 113 sont identiques de sorte que chaque gaz a la même surface d'échange avec le fluide caloporteur (i.e. le même parcours dans l'échangeur thermique 100). Ceci permet d'uniformiser les échanges entre les gaz circulant dans les trois conduits et le fluide caloporteur en vue de leur refroidissement.

En sortie de la deuxième enceinte E2, le premier circuit de circulation 111 se prolonge par un conduit 121 jusqu'à un distributeur 131. En aval de ce distributeur, le premier circuit de circulation se prolonge par deux conduits, à savoir un conduit 125 débouchant dans une chambre de pré-mélange 142 formée en amont de la chambre de combustion 140, et un conduit 126 débouchant dans une chambre d'air de dilution 144 formée autour de la chambre de combustion 140.

En sortie de la deuxième enceinte E2, le deuxième et le troisième circuits de circulation 112, 113 se prolongent chacun par un conduit, respectivement 122 et 123, qui se raccordent au niveau d'une jonction 124 pour déboucher dans la chambre de pré-mélange 142.

De la sorte, la chambre de pré-mélange 142 est alimentée par du gaz comburant issu d'un prélèvement sur le premier circuit de circulation 111 et par du gaz combustible issu des deuxième et troisième circuits de circulation 112, 113. Ces gaz ayant été refroidis au cours de leur circulation dans les circuits de circulation 111 à 113, le mélange de l'hydrogène et de l'air peut être effectué sans risque d'auto-inflammation avant d'être injecté dans la chambre de combustion 140.

Par ailleurs, ce mélange ayant une température bien inférieure à celle des gaz alimentant l'échangeur thermique 100 et issu de la pile à combustible 200, l'injection de ce mélange dans la chambre de combustion 140 peut être mise en oeuvre à l'aide de matériaux basse performance, par exemple en acier inoxydable, utilisés habituellement dans les chaudières du commerce.

Quant à la chambre de combustion 140, elle est alimentée, d'une part par le mélange de gaz comburant/combustible issu de la chambre de pré-mélange 142 (en passant au travers d'une grille d'injection 145 détaillée ci-après), et d'autre part par du gaz comburant issu d'un prélèvement sur le premier circuit de circulation 111 et transitant par la chambre d'air de dilution 144 (via le conduit 126).

La chambre de pré-mélange 142 débouche dans la chambre de combustion 140 au travers d'une grille d'injection 145. Une telle grille d'injection comporte un grand nombre de trous (par exemple circulaires) de petite section. Le nombre de trous, leur taille et leur profondeur sont choisis de façon à obtenir une vitesse d'écoulement des gaz permettant d'accrocher la flamme à la grille d'injection, d'éviter les remontées de flamme vers la chambre de pré-mélange, et d'obtenir une flamme courte limitant ainsi la longueur de la chambre de combustion nécessaire.

La chambre de pré-mélange 142 peut également comporter une grille de mélange 146 séparant son volume interne en deux parties. Une telle grille de mélange a pour fonction d'améliorer le mélange entre le gaz comburant et le gaz combustible.

Par ailleurs, l'alimentation de la chambre de combustion 140 par les gaz comburant provenant de la chambre d'air de dilution 144 s'effectue de manière annulaire autour de la grille d'injection 145. A cet effet, la paroi cylindrique délimitant la chambre de combustion comporte, en regard de la grille d'injection 145, une pluralité d'orifices 147 s'ouvrant dans la chambre de pré-mélange 142 et débouchant dans la chambre de combustion (figure 3).

Enfin, la chambre de combustion 140 comporte un allumeur 148 de post-combustion centré sur la grille d'injection 145 et permettant d'allumer le mélange comburant/combustible.

Les conduits 122 et 123 sont équipés de dispositifs, respectivement 132 et 133, qui permettent de piloter et de réguler l'apport en gaz combustible dans la chambre de pré-mélange 142 (et donc dans la chambre de combustion 140). Les dispositifs 132, 133, comme le distributeur 131 équipant la conduite 121, sont par exemple des électrovannes commandées par un dispositif de contrôle (non représenté sur les figures).

Les dispositifs 132 et 133 peuvent également permettre de sélectionner la source d'alimentation en hydrogène de la chambre de pré-mélange 142. Ainsi par exemple, durant certains régimes transitoires du reformeur 300, notamment lors de son démarrage, la quantité d'hydrogène fourni par le reformeur ne permet pas à la pile à combustible 200 de fonctionner normalement. Dans ce cas, le dispositif 132 est commandé de sorte que la chambre de combustion 140 soit à ce moment là alimentée en hydrogène provenant du reformeur (gaz issu du troisième circuit de circulation 113).

A la fin du régime transitoire, le dispositif 132 est commandé de sorte à ouvrir le circuit 122 dans lequel circule l'hydrogène provenant de la pile 200 et le dispositif 133 est également commandé de sorte à fermer le circuit 123 dans lequel circule l'hydrogène provenant du reformeur 300.

Comme mentionné précédemment, la chambre de combustion 140 est elle-même immergée dans le fluide caloporteur dans l'enceinte E1, ce qui permet d'abaisser sa température. Ceci permet avantageusement de réduire les quantités d'oxydes d'azote (NOx) émises lors de la combustion du mélange gazeux.

Les fumées provenant de la chambre de combustion 142 sont recueillies dans le circuit de circulation 114 formé par plusieurs conduits agencés en spirales. Ces conduits sont eux aussi immergés dans le fluide caloporteur de l'enceinte E1, de sorte que la chaleur contenue dans les fumées de combustion est également récupérée par le fluide, ce dernier pouvant alors être utilisé à des fins de chauffage.

Les fumées refroidies sont alors récupérées par un collecteur 104 en sortie des conduits du circuit 114.

Ainsi, grâce à l'invention, il est possible de récupérer toute la chaleur (chaleur propre et pouvoir calorifique) des gaz issus de la pile à combustible chaude (et éventuellement du reformeur) tout en permettant l'utilisation de matériaux basse performance pour l'échangeur thermique. Ceci est permis en immergeant dans un même fluide caloporteur les circuits de circulation des gaz issus de la pile et du reformeur d'une part et la chambre à combustion et le circuit de circulation des fumées issues de la combustion d'autre part. Ainsi, non seulement la chaleur propre des gaz est récupérée par le fluide, mais le pouvoir calorifique de ces gaz est également converti en chaleur et transmis à ce même fluide.

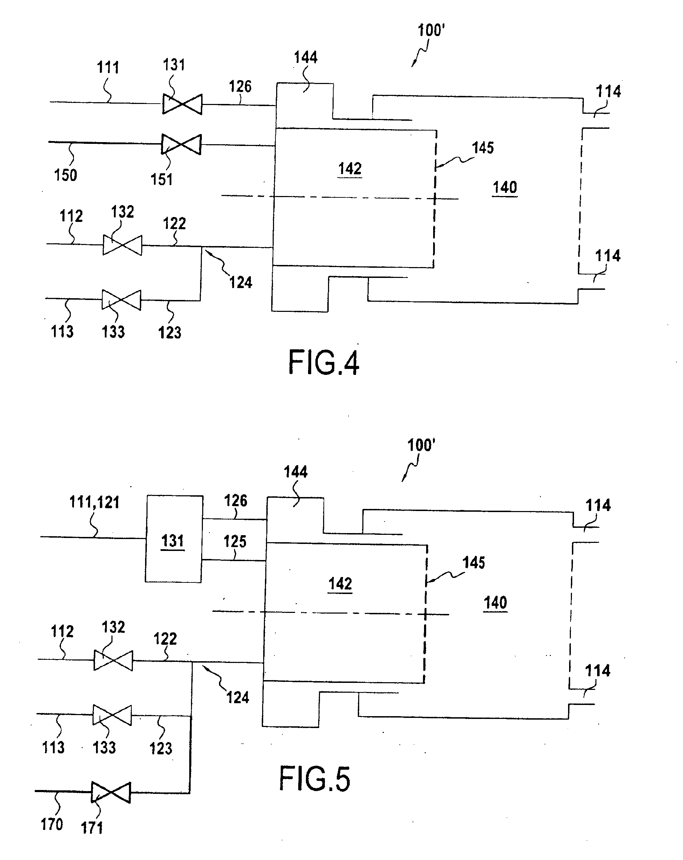

La figure 4 est un schéma fonctionnel représentant un échangeur thermique 100' selon un deuxième mode de réalisation de l'invention.

Cet échangeur thermique 100' se distingue de celui précédemment décrit en liaison avec les figures 1 à 3 en ce que les gaz comburant alimentant la chambre de pré-mélange 142 sont issus d'un circuit extérieur 150 de circulation de gaz comburant réglable en débit (au moyen par exemple d'une électrovanne 151). Par ailleurs, le premier circuit de circulation 111 est uniquement raccordé à la chambre d'air de dilution 144 (via le conduit 126) et le dispositif 131 monté sur ce circuit 111 est une électrovanne.

La présence du circuit extérieur 150 de circulation de gaz comburant présente comme avantage de disposer d'une plus grande souplesse de réglage du débit en gaz comburant.

La figure 5 est un schéma fonctionnel représentant un échangeur thermique 100" selon un troisième mode de réalisation de l'invention.

Cet échangeur thermique 100" se distingue de celui décrit en liaison avec les figures 1 à 3 en ce qu'il comporte en outre un circuit extérieur 170 de circulation de gaz combustible alimentant la chambre de pré-mélange 142. Ce circuit extérieur 170 est régulé par exemple au moyen d'une électrovanne 171.

Plus précisément, ce circuit extérieur 170 de circulation de gaz combustible est raccordé à la jonction 124 entre les conduits 122 et 123 des deuxième et troisième circuits de circulation 112, 113.

La présence du circuit extérieur 170 de circulation de gaz combustible a pour avantage de pouvoir augmenter si besoin l'énergie disponible pour la chaudière, notamment si les gaz issus de la pile à combustible en amont ne suffisent pas à assurer la demande en chaleur sur l'échangeur thermique.

## Revendications

1. Echangeur thermique (100, 100', 100") destiné à fonctionner en sortie d'une pile à combustible chaude alimentant ledit échangeur en gaz comburant et combustible, l'échangeur comportant :
un premier circuit (111) de circulation de gaz comburant ;
un deuxième circuit (112) de circulation de gaz combustible ;
une chambre de pré-mélange (142) alimentée par des gaz combustible issus au moins du deuxième circuit (112) et par des gaz comburant ;
une chambre de combustion (140) alimentée par le mélange gazeux issu de la chambre de pré-mélange et par des gaz comburant issus du premier circuit (111) ; et
un circuit (114) de circulation de fumées recevant les fumées provenant de la chambre de combustion (140) ; charactérisé en ce que
le premier circuit de circulation de gaz comburant (111), le deuxième circuit de circulation de gaz combustible (112), la chambre de combustion (140) et le circuit de circulation de fumées (114) sont immergés dans un même fluide caloporteur.

2. Echangeur thermique (100) selon la revendication 1, dans lequel les gaz comburant alimentant la chambre de pré-mélange (142) sont issus d'un prélèvement sur le premier circuit (111).

3. Echangeur thermique (100') selon la revendication 1, dans lequel les gaz comburant alimentant la chambre de pré-mélange (142) sont issus d'un circuit extérieur (150) de circulation de gaz comburant.

4. Echangeur thermique (100, 100', 100") selon l'une quelconque des revendications 1 à 3, comportant en outre un troisième circuit (113) de circulation de gaz combustible alimentant la chambre de pré-mélange (142) et immergé dans le fluide caloporteur.

5. Echangeur thermique (100") selon la revendication 4, comportant en outre un circuit extérieur (170) de circulation de gaz combustible alimentant la chambre de pré-mélange (142).

6. Echangeur thermique (100, 100', 100") selon l'une quelconque des revendications 1 à 5, comprenant en outre une première enceinte (E1) comportant le circuit de circulation de fumées (114) et la chambre de combustion (140), et une deuxième enceinte (E2) comportant les circuits de circulation (111,112,113) des gaz comburant et combustible, lesdites première et deuxième enceintes (E1,E2) étant adaptées à communiquer l'une avec l'autre de sorte que le fluide caloporteur circule dans les deux enceintes.

7. Echangeur thermique (100, 100', 100") selon l'une quelconque des revendications 1 à 6, dans lequel la chambre de pré-mélange (142) est séparée de la chambre de combustion (140) par une grille d'injection (145).

8. Echangeur thermique (100, 100', 100") selon la revendication 7, dans lequel l'alimentation de la chambre de combustion (140) par les gaz comburant issus directement du premier circuit (111) s'effectue de manière annulaire autour de la grille d'injection (145).

9. Echangeur thermique (100, 100', 100") selon l'une quelconque des revendications 1 à 8, dans lequel les gaz comburant issus directement du premier circuit (111) et alimentant la chambre de combustion (140) transitent par une chambre d'air de dilution (144) formée autour de la chambre de combustion.

10. Echangeur thermique (100, 100', 100") selon l'une quelconque des revendications 1 à 9, dans lequel le fluide caloporteur est de l'eau.

11. Chaudière destinée à fonctionner en sortie d'une pile à combustible chaude, comportant un échangeur thermique (100, 100', 100") selon l'une quelconque des revendications 1 à 10.

12. Système (500) de cogénération d'énergie thermique et d'énergie électrique comportant :
une pile à combustible chaude (200) ; et
un échangeur thermique (100, 100', 100") selon l'une quelconque des revendications 1 à 10, alimenté en gaz comburant et combustible par la pile à combustible chaude (200).

13. Système (500) selon la revendication 12, comportant en outre un reformeur (300), l'échangeur thermique comprenant un deuxième (112) et un troisième (113) circuits de circulation d'un gaz combustible, le deuxième et le troisième circuit de circulation étant alimentés respectivement par la pile à combustible chaude (200) et par le reformeur.

## Patentansprüche

1. Wärmetauscher (100, 100', 100"), der dazu bestimmt ist, am Ausgang einer heißen Brennstoffzelle, welche den Tauscher mit brandförderndem Gas und Brenngas versorgt, zu arbeiten, wobei der Tauscher umfasst:
einen ersten Kreis (111) zur Zirkulation von brandförderndem Gas,
einen zweiten Kreis (112) zur Zirkulation von Brenngas,
eine Vormischkammer (142), die mit wenigstens aus dem zweiten Kreis (112) stammenden Brenngasen und mit brandfördernden Gasen beaufschlagt wird,
eine Brennkammer (140), die mit dem aus der Vormischkammer stammenden Gasgemisch und mit aus dem ersten Kreis (111) stammenden brandfördernden Gasen beaufschlagt wird, und
einen Kreis (114) zur Zirkulation von Rauchgasen, der die aus der Brennkammer (140) kommenden Rauchgase aufnimmt,
**dadurch gekennzeichnet, dass** der erste Kreis zur Zirkulation von brandförderndem Gas (111), der zweite Kreis zur Zirkulation von Brenngas (112), die Brennkammer (140) und der Rauchgaszirkulationskreis (114) in einen gleichen Wärmeträger eingetaucht sind.

2. Wärmetauscher (100) nach Anspruch 1, wobei die brandfördernden Gase, mit denen die Vormischkammer (142) beaufschlagt wird, aus einer Entnahme aus dem ersten Kreis (111) stammen.

3. Wärmetauscher (100') nach Anspruch 1, wobei die brandfördernden Gase, mit denen die Vormischkammer (142) beaufschlagt wird, aus einem äußeren Kreis (150) zur Zirkulation von brandförderndem Gas stammen.

4. Wärmetauscher (100, 100', 100") nach einem der Ansprüche 1 bis 3, ferner umfassend einen dritten Kreis (113) zur Brenngaszirkulation, der die Vormischkammer (142) versorgt und in den Wärmeträger eingetaucht ist.

5. Wärmetauscher (100") nach Anspruch 4, ferner umfassend einen äußeren Kreis (170) zur Brenngaszirkulation, der die Vormischkammer (142) versorgt.

6. Wärmetauscher (100, 100', 100") nach einem der Ansprüche 1 bis 5, ferner umfassend einen ersten Raum (E1), welcher den Rauchgaszirkulationskreis (114) und die Brennkammer (140) umfasst, sowie einen zweiten Raum (E2), welcher die Zirkulationskreise (111, 112, 113) der brandfördernden Gase und Brenngase umfasst, wobei der erste und der zweite Raum (E1, E2) dazu ausgelegt sind, miteinander verbunden zu sein, so dass der Wärmeträger in beiden Räumen zirkuliert.

7. Wärmetauscher (100, 100', 100") nach einem der Ansprüche 1 bis 6, wobei die Vormischkammer (142) durch ein Einspritzgitter (145) von der Brennkammer (140) getrennt ist.

8. Wärmetauscher (100, 100', 100") nach Anspruch 7, wobei die Beaufschlagung der Brennkammer (140) mit den direkt aus dem ersten Kreis (111) kommenden brandfördernden Gasen ringförmig um das Einspritzgitter (145) herum erfolgt.

9. Wärmetauscher (100, 100', 100") nach einem der Ansprüche 1 bis 8, wobei die brandfördernden Gase, die direkt aus dem ersten Kreis (111) kommen und mit denen die Brennkammer beaufschlagt wird, eine um die Brennkammer herum ausgebildete Verdünnungsluftkammer (144) durchqueren.

10. Wärmetauscher (100, 100', 100") nach einem der Ansprüche 1 bis 9, wobei der Wärmeträger Wasser ist.

11. Kessel, der dazu bestimmt ist, am Ausgang einer heißen Brennstoffzelle zu arbeiten, umfassend einen Wärmetauscher (100, 100', 100") nach einem der Ansprüche 1 bis 10.

12. System (500) zur gleichzeitigen Erzeugung von Wärmeenergie und elektrischer Energie, umfassend:
eine heiße Brennstoffzelle (200) und
einen Wärmetauscher (100, 100', 100") nach einem der Ansprüche 1 bis 10, der über die heiße Brennstoffzelle (200) mit brandförderndem Gas und Brenngas versorgt wird.

13. System (500) nach Anspruch 12, ferner umfassend einen Reformer (300), wobei der Wärmetauscher einen zweiten (112) und einen dritten (113) Kreis zur Zirkulation eines Brenngases umfasst, wobei der zweite und der dritte Zirkulationskreis über die heiße Brennstoffzelle (200) bzw. über den Reformer versorgt werden.

## Claims

1. A heat exchanger (100, 100', 100") for operating at the outlet of a hot fuel cell feeding said heat exchanger with oxidizer gas and with fuel gas, the heat exchanger comprising:
• a first flow circuit (111) for oxidizer gas;
• a second flow circuit (112) for fuel gas;
• a pre-mixer chamber (142) fed both with oxidizer gas and with fuel gas from at least the second circuit (112);
• a combustion chamber (140) fed with the gaseous mixture from the pre-mixer chamber and with oxidizer gas from the first circuit (111); and
• a flow circuit (114) for flue gas, receiving the flue gas coming from the combustion chamber (140);
**characterized in that** the first flow circuit (111) for oxidizer gas, the second flow circuit (112) for fuel gas, the combustion chamber (140), and the flow circuit (114) for flue gas are immersed in a common cooling fluid.

2. A heat exchanger (100) according to claim 1, wherein the oxidizer gas feeding the pre-mixer chamber (142) is taken from the first circuit (111).

3. A heat exchanger (100') according to claim 1, wherein the oxidizer gas feeding the pre-mixer chamber (142) is taken from an external flow circuit (150) for oxidizer gas.

4. A heat exchanger (100, 100', 100") according to any one of claims 1 to 3, further comprising a third flow circuit (113) for fuel gas feeding the pre-mixer chamber (142) and immersed in the cooling fluid.

5. A heat exchanger (100") according to claim 4, further comprising an external flow circuit (170) for fuel gas feeding the pre-mixer chamber (142).

6. A heat exchanger (100, 100', 100") according to any one of claims 1 to 5, further comprising a first enclosure (E1) including the flow circuit (114) for flue gas and the combustion chamber (140), and a second enclosure (E2) including the flow circuits (111, 112, 113) for oxidizer gas and fuel gas, said first and second enclosures (E1, E2) being adapted to communicate with each other in such a manner that the cooling fluid flows in both enclosures.

7. A heat exchanger (100, 100', 100") according to any one of claims 1 to 6, wherein the pre-mixer chamber (142) is separated from the combustion chamber (140) by an injection grid (145).

8. A heat exchanger (100, 100', 100") according to claim 7, wherein oxidizer gas taken directly from the first circuit (111) is fed to the combustion chamber (140) in annular manner around the injection grid (145).

9. A heat exchanger (100, 100', 100") according to any one of claims 1 to 8, wherein the oxidizer gas taken directly from the first circuit (111) and feeding the combustion chamber (140) passes via a dilution air chamber (144) formed around the combustion chamber.

10. A heat exchanger (100, 100', 100") according to any one of claims 1 to 9, wherein the cooling fluid is water.

11. A boiler for operating at the outlet from a hot fuel cell, the boiler including a heat exchanger (100, 100', 100") according to any one of claims 1 to 10.

12. A system (500) for cogeneration of heat energy and of electrical energy, the system comprising:
• a hot fuel cell (200); and
• a heat exchanger (100, 100', 100") according to any one of claims 1 to 10 and fed with oxidizer gas and fuel gas by the hot fuel cell (200).

13. A system (500) according to claim 12, further comprising a reformer (300), the heat exchanger including second and third flow circuits (112 and 113) for fuel gas, the second and third flow circuits being fed respectively by the hot fuel cell (200) and by the reformer.
